# EUROPÄISCHE PATENTSCHRIFT

(11) **EP 0 521 268 B1**
(45) Veröffentlichungstag und Bekanntmachung des Hinweises auf die Patenterteilung: **27.09.1995**
(21) Anmeldenummer: 92107933.1
(22) Anmeldetag: 12.05.1992
(51) Int. Cl.: F16D 43/206

(54) **Rutschkupplung**
Overload coupling
Accouplement à surcharge

(30) Priorität: 02.07.1991 DE 4121892
(43) Veröffentlichungstag der Anmeldung: 07.01.1993
(73) Patentinhaber: Daimler-Benz Aerospace Airbus Gesellschaft mit beschränkter Haftung, 21129 Hamburg (DE)
(72) Erfinder: Kallies, Günter, W-2000 Hamburg 54 (DE); Lessat-Kaupat, Wolfgang, W-2104 Hamburg 92 (DE)
(74) Vertreter: Hansmann, Dierk, Dipl.-Ing.

(56) Entgegenhaltungen:
- DE-A- 3 120 303
- DE-A- 3 330 287
- DE-A- 3 443 072
- DE-A- 3 835 050
- DE-U- 8 623 878
- DE-U- 8 711 964
- FR-A- 2 349 383
- FR-A- 2 351 313
- FR-A- 2 543 464
- GB-A- 855 922
- GB-A- 2 071 236
- US-A- 3 930 382
- US-A- 3 998 565

## Beschreibung

Die Erfindung bezieht sich auf eine Rutschkupplung zum Begrenzen des in ein Bauteil, beispielsweise in eine Welle, einzuleitenden Drehmoments.

Hierdurch kann außer dem Schutz eines Maschinenelementes auch erreicht werden, daß ein Bewegungablauf nicht unterbrochen wird, wenn ein daran beteiligtes Element plötzlich versagen und damit ein Blockieren der Bewegung verursachen würde. Eine Flugzeugtür wird zum Öffnen mittels einer Verriegelungsmechanik angehoben und dann nach außen geschwenkt. Im Notfall wird während des Anhebevorganges durch einen türseitigen Bolzen ein Hebel am Türrahmen betätigt. Dieser Hebel ist auf einem Wellenende befestigt, welches mit einer Rutschkupplung in Verbindung steht. Von der Rutschkupplung wird die Bewegung über einen Bowdenzug abgenommen und als Linearbewegung auf die Notrutschenauslösung übertragen. Damit wird erreicht, daß in einem Notfall durch das Öffnen der Tür automatisch die Notrutsche in einen betriebsbereiten Zustand gebracht wird. Hierzu ist es erforderlich, daß die Bewegung schlupffrei über die Rutschkupplung auf den Bowdenzug übertragen wird. Ist in einem Notfall die Bewegung des Bowdenzuges blockiert, soll die Rutschkupplung bei Erreichen eines vorgegebenen Drehmomentes ausrasten und einen hinreichend großen begrenzten Drehwinkel freigeben, damit die Tür trotzdem geöffnet werden kann. Um eine leichte Bedienung der Tür von Hand nach dem Ausrasten der Rutschkupplung sicherzustellen, wird von dieser gefordert, daß sie ein niedriges Restmoment aufweist.

Eine Rutschkupplung ist beispielsweise durch das Dokument DE-A-3 443 072 bekannt. Hierbei handelt es sich um eine Rutschkupplung mit federbelasteten Kugeln, wobei vorgesehen ist, daß die Kugeln zwischen einer Rastenscheibe und einer Druckscheibe in einer Kugelführungsscheibe angeordnet sind. Bei Überschreitung des zulässigen Momentes treten hierbei die Kugeln entgegen der Federkraft aus den einzelnen Vertiefungen der Rastenscheibe aus und gelangen in Umfangsrichtung in die jeweils nächste Vertiefung und so fort, bis das zulässige Moment wieder unterschritten wird. Eine Winkelbegrenzung zwischen Antrieb und Abtrieb sind diesem Dokument nicht zu entnehmen.

Das Dokument US-3 930 382, zeigt eine Sicherheitskupplung, wodurch ein Antriebsmotor im Überlastfall über einen Schalter abgeschaltet wird. Diese Kupplung arbeitet mit Kugeln, die in normalem Betriebszustand durch Federkraft in entsprechende prismatische Vertiefungen gedrückt werden. Im Überlastfall rollen die Kugeln auf den betreffenden Schrägen der Vertiefungen nach oben, was eine Axialbewegung einer Sensorplatte bewirkt, die über einen Näherungsschalter die Abschaltung des Motors auslöst. Hierbei ist die Relativbewegung zwischen Antrieb und Abtrieb auf einen engen Bereich begrenzt, damit die Kugeln im Überlastfall die betreffenden Vertiefungen nicht verlassen und nach Wegfall der Überlastung wieder in ihre ursprüngliche Lage zurückkehren.

Demgemäß liegt der Erfindung die Aufgabe zugrunde, eine gattungsgemäße Rutschkupplung derart auszubilden, daß diese eine Winkelbegrenzung und ein niedriges Restmoment aufweist.

Diese Aufgabe wird bei einer gattungsgemäßen Rutschkupplung durch die kennzeichnenden Merkmale des Patentanspruchs 1 gelöst.

Dabei ist insbesondere von Vorteil, daß sich auch ein geringes Baugewicht der Rutschkupplung ergibt.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: einen Längsschnitt durch eine Rutschkupplung,
- Fig. 2: den Schnitt II-II nach Fig. 1,
- Fig. 3: eine Ansicht der Mitnehmerscheibe und
- Fig. 4: den Schnitt IV-IV nach Fig. 3.

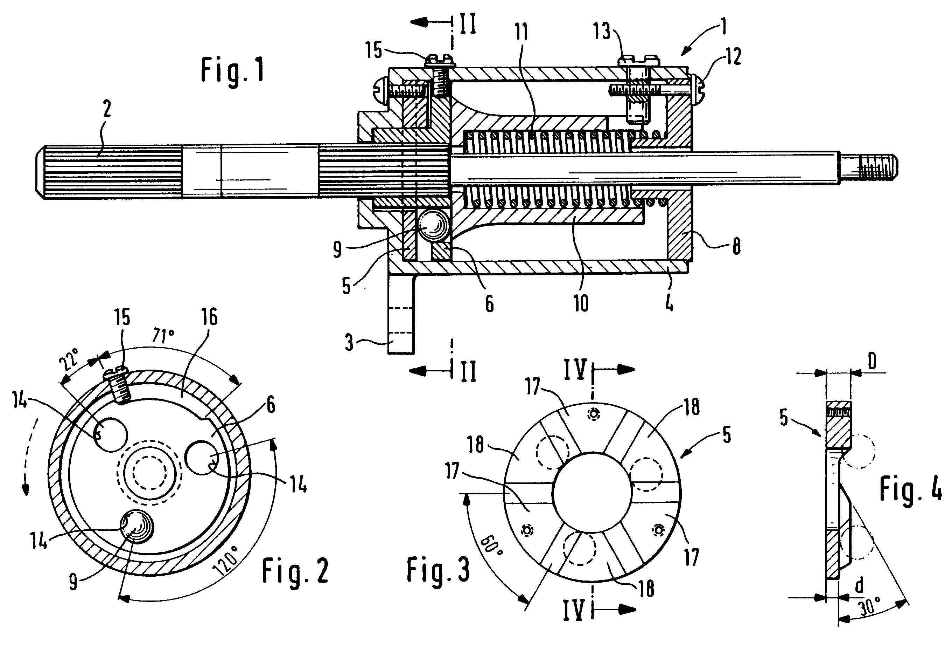

Die Figuren 1 und 2 zeigen eine Rutschkupplung 1 mit einem Antrieb 2, einem Abtrieb 3 und einem Gehäuse 4, das rotationssymmetrisch um die Achse des Antriebs 2 angeordnet ist, wobei das Gehäuse 4 im Bild links eine Stirnwand 7 aufweist, in der der Antrieb 2 gelagert ist. Innerhalb des Gehäuses 4 ist eine an die Stirnwand 7 angelegte Mitnehmerscheibe 5 drehfest gesichert. Das Gehäuse 4 ist rechts im Bild durch eine eingesetzte Stirnwand 8 geschlossen. Mit dem Antrieb 2 ist ein Käfigelement anhand einer Verzahnung formschlüssig verbunden, wobei das Käfigelement als Lochscheibe 6 ausgebildet ist, deren Dicke deutlich kleiner gehalten ist als der Durchmesser der Kugeln. Am Ende der Verzahnung setzt sich der Antrieb 2 mit reduziertem Durchmesser fort und ist innerhalb der rechten Stirnwand 7 gelagert. Die Lochscheibe 6 weist drei axiale Durchgangsbohrungen auf, worin sich je eine Kugel 9 befindet. Mit den Kugeln 9 steht ein Druckelement mit seiner linken Stirnfläche in Berührung. Zur Lieferung der Federkraft ist eine koaxial um den Antrieb 2 angeordnete aus einem Stapel von Ringfedern bestehende Druckfeder 11 vorgesehen, die mit zentralem Angriff über das Druckelement auf die Kugeln einwirkt. Als Druckelement dient hier eine Druckhülse 10, die die Druckfeder 11 umschließt und damit seitlich abstützt. Die Druckfeder 11 stützt sich im Bild links gegen einen inneren Bund der Druckhülse 10 und rechts gegen die Stirnwand 8 ab. Um der Druckfeder 11 eine einstellbare Vorspannung zu erteilen, ist die Position der Stirnwand 8 gegenüber dem Gehäuse 4 axial verstellbar. Hierzu sind drei Stellschrauben 12 vorgesehen, die in gehäuseseitige radiale, jeweils ein Quergewinde aufweisende Ankerbolzen 13 eingeschraubt sind. Die Ankerbolzen 13 ragen so weit ins Innere des Gehäuses 4, daß sie in entsprechende axial ausgerichtete Schlitze der Druckhülse 10 hineinragen, ohne jedoch die Druckfeder 11 zu berühren. Hierdurch ist die Druckhülse 10 gegenüber dem Gehäuse gegen Verdrehen gesichert.

In Figur 2 erscheint die Lochscheibe 6 mit den drei Bohrungen 14 für die Kugeln in der Ansicht. Durch eine gehäuseseitige Anschlagschraube 15 und einen entsprechenden Ausschnitt im Umfangsbereich der Lochscheibe 6 ist eine Winkelbegrenzung geschaffen, die eine maximale Drehung des Antriebes relativ zum Gehäuse 4 von 71° zuläßt.

Die Figuren 3 und 4 zeigen Einzelheiten der Mitnehmerscheibe 5. Diese weist Bereiche 17 von der Dicke D und dünne Bereiche 18 von der Dicke d auf, wovon letztere die besagten Senkungen bilden. Die Übergänge zwischen den Senkungen und den erhöhten Bereichen werden durch schräge Flächen gebildet, die hier eine Neigung von 30° aufweisen.

Eine andere Ausgestaltung der Erfindung besteht darin, daß das Druckelement als Druckscheibe ausgebildet ist. Dabei wird die Druckfeder durch den Antrieb 2 von innen gestützt, so daß die die Hülse entfällt.

Die Verwirklichung der Druckfeder 11 durch einen Stapel von Ringfedern anstelle einer üblichen Schraubenfeder hat folgende vorteilhafte Wirkungen.

Das zum Ausrasten der Rutschkupplung erforderliche Moment ist relativ hoch, da nicht nur die Federkraft sondern auch die Reibung der Feder zu überwinden ist. Hierdurch ergibt sich im normalen Betrieb eine schlupffreie formschlüssige Verbindung zwischen Antrieb und Abtrieb.

Andererseits hat die Reibung der Ringfedern das eingangs genannte niedrige Restmoment zur Folge. Damit ist das von den Ringfedern nach außen ausgeübte nach Abzug der Reibwirkung verbleibende restliche Moment gemeint. Dieses Moment entsteht, wenn die Kugeln aus ihrer ausgerasteten Position wieder in die Senkungen zurückrollen und hat zur Folge, daß der Antrieb wieder in seine Ausgangsposition gegenüber dem Abtrieb zurückgestellt wird. Die Reduzierung des Rückstell- bzw. Restmoments wird durch die bekannte Eigenschaft der Ringfedern erreicht, daß sie zusätzlich zur Formänderungsarbeit des Federmaterials einen beachtlichen Energieanteil durch Reibung verbrauchen. Hierdurch gibt die Rutschkupplung beim Zurückrollen der Kugeln in die Senkungen ein Moment ab, das deutlich kleiner ist als das aufgrund der in den Ringfedern gespeicherten Energie zu erwartende. Aufgrund dieses deutlich reduzierten Rückstellmomentes ist eine in ausgerastetem Zustand vorzunehmende Bedienungsmaßnahme leichter durchführbar.

Die vorgenannten Gewichtsvorteile ergeben sich durch die bei Ringfedern äußerst günstige Materialausnutzung.

## Patentansprüche

1. Rutschkupplung zum Begrenzen eines Drehmoments mit einem Gehäuse (4) und einem darin gelagerten Antrieb (2), mit einem drehfest mit dem Gehäuse (4) verbundenen Abtrieb (3) mit einer mehrere Senkungen aufweisenden Mitnehmerscheibe (5) und abtriebsseitig ferner mit einem den Senkungen gegenüberliegenden Käfigelement, das entsprechend der Anzahl der Senkungen, mehrere axiale Bohrungen zur Aufnahme je einer Kugel (9) aufweist und als Lochscheibe (6) ausgebildet ist, deren Dicke deutlich kleiner gehalten ist als der Durchmesser der Kugeln (9), wobei das Gehäuse (4) ferner eine einstellbare Andruckplatte so aufweist, daß die Kugeln (9) mit einer wählbaren Federkraft in die Senkungen gepreßt werden, und zur Lieferung der Federkraft eine koaxial um den Antrieb angeordnete Druckfeder (11) vorgesehen ist, die mit zentralem Angriff über ein Druckelement auf die Kugeln (9) einwirkt, und der Antrieb (2) mit der Lochscheibe (6) verbunden ist,
dadurch **gekennzeichnet**, daß die Druckfeder (11) durch einen Stapel von Ringfedern gebildet ist und eine Winkelbegrenzung zwischen Antrieb (2) und Abtrieb (3) durch eine gehäuseseitige Anschlagschraube (15) erreicht wird, die in einen Ausschnitt des Umfangsbereiches der Lochscheibe (6) hineinragt.

2. Rutschkupplung nach Anspruch 1, dadurch **gekennzeichnet**, daß das Druckelement als Druckhülse (10) ausgebildet ist.

3. Rutschkupplung nach Anspruch 1 oder 2, dadurch **gekennzeichnet**, daß das Druckelement als Druckscheibe ausgebildet ist.

## Claims

1. Slipping clutch for limiting a torque, having a housing (4) and a drive (2) supported therein, having an output (3) non-rotatably connected to the housing (4) and having a driver disc (5) with a plurality of depressions and on the output side further having a cage element lying opposite the depressions, which in accordance with the number of depressions has a plurality of axial bores for receiving in each case one ball (9) and takes the form of a holed disc (6), whose thickness is kept much smaller than the diameter of the balls (9), the housing (4) further having an adjustable pressure plate so that the balls (9) are pressed with a selectable spring force into the depressions, and there being provided for supplying the spring force a pressure spring (11) which is disposed coaxially around the drive and acts with central application via a pressure element upon the balls (9), and the drive (2) being connected to the holed disc (6), characterized in that the pressure spring (11) is formed by a stack of annular springs and a delimitation of the angle between drive (2) and output (3) is achieved by means of a housing-side stop screw (15) which projects into a cutout portion of the peripheral region of the holed disc (6).

2. Slipping clutch according to claim 1, characterized in that the pressure element is realized as a pressure sleeve (10).

3. Slipping clutch according to claim 1 or 2, characterized in that the pressure element is realized as a pressure plate.

## Revendications

1. Accouplement à friction destiné à limiter un couple de rotation et comprenant un carter (4) dans lequel est disposé un arbre moteur (2), une commande de sortie (3) reliée fixement au carter (4), un disque d'entraînement (5) présentant plusieurs creux ainsi qu'un élément en forme de cage assurant l'entraînement de la commande de sortie et disposé vis-à-vis des creux du disque d'entraînement, cet élément présentant plusieurs alésages axiaux correspondant au nombre de creux et destinés chacun à la réception d'une bille (9) et étant conçu comme un disque à trous (6) dont l'épaisseur est maintenue nettement inférieure au diamètre des billes (9), le carter (4) présentant en outre un élément de pression ajustable de telle manière que les billes (9) peuvent être pressées dans les creux avec une force sélectionnable, un ressort de pression (11) disposé coaxialement autour de l'arbre moteur, ce ressort de pression influant sur les billes (9) par une attaque centrale via l'élément de pression, le disque à trous (6) étant relié à l'arbre moteur (2), caractérisé en ce que le ressort de pression (11) est formé à partir d'une pile de rondelles élastiques et en ce que une limitation angulaire (3) est obtenue par l'introduction d'une vis d'arrêt (15) sur la face du carter, cette vis avançant jusque dans une découpe de la zone périphérique du disque à trous (6).

2. Accouplement à friction selon la revendication 1, caractérisé par le fait que l'élément de pression se présente sous la forme d'une douille de pression (10).

3. Accouplement à friction selon la revendication 1 ou 2, caractérisé par le fait que l'élément de pression se présente sous la forme d'une plateau de pression.
